# EUROPÄISCHE PATENTSCHRIFT

(11) **EP 3 882 560 B1**
(45) Veröffentlichungstag und Bekanntmachung des Hinweises auf die Patenterteilung: **31.08.2022**
(21) Anmeldenummer: 21162248.5
(22) Anmeldetag: 12.03.2021
(51) Int. Cl.: F41H 11/02, F42B 12/70, G01S 13/78, F41G 3/22, F42B 15/01, F41G 7/22

(54) **VERFAHREN ZUM SCHÜTZEN EINES FAHRZEUGS DURCH EINE FREUND-FEIND-ERKENNUNG**
METHOD FOR PROTECTING A VEHICLE BY MEANS OF FRIEND/FOE DETECTION
PROCÉDÉ DE PROTECTION D'UN VÉHICULE AU MOYEN D'UNE IDENTIFICATION AMI/ENNEMI

(30) Priorität: 20.03.2020 DE 102020001850
(43) Veröffentlichungstag der Anmeldung: 22.09.2021
(73) Patentinhaber: Diehl Defence GmbH & Co. KG, 88662 ÜBERLINGEN (DE)
(72) Erfinder: Weyßer, Robert, 88630 Pfullendorf (DE); Hahma, Arno, 91239 Henfenfeld (DE); Frieauff, Dieter, 88630 Pfullendorf (DE)
(74) Vertreter: Diehl Patentabteilung

(56) Entgegenhaltungen:
- DE-A1- 2 908 231
- US-A- 3 954 228
- US-A- 5 400 134
- US-A- 5 748 138
- US-B1- 6 545 632

## Beschreibung

Die Erfindung betrifft ein Verfahren zum Schützen eines Fahrzeugs durch eine Freund-Feind-Erkennung, bei dem ein Fluggerät mit einem Trackingsystem, das einen Trackingsensor und eine Steuereinheit enthält, das Fahrzeug in einem Angriff ansteuert.

Bei militärischen Auseinandersetzungen besteht die Gefahr des sogenannten "Friendly Fire", bei dem ein Fluggerät ein freundliches Fahrzeug fälschlicherweise als feindlich klassifiziert und bekämpft. Um solche Unfälle zu vermeiden, ist es bekannt, dass ein irrtümlicherweise angegriffenes Fahrzeug per Funk eine Freundkennung aussendet, diese von einem Feuerleitradar, das das angreifende Fluggerät steuert, empfangen wird, das Feuerleitradar die Freundkennung als solche erkennt, das Fahrzeug als freundlich identifiziert und den Angriff abbricht.

Aus der US 5,400,134 B1 ist eine Einrichtung zum Aufspüren von Helikoptern bekannt, die mittels eines IR-Sensors von oben auf einen fliegenden Helikopter schaut. Durch den Rotor des Helikopters wird vom Helikopter abgestrahlte IR-Strahlung moduliert, aus der die Einrichtung erkennen kann, dass es sich um einen Helikopter handelt. Da die Modulation vom Typ des Helikopters ist, kann di empfangene IR-Strahlung auch zur Freund-Feind-Erkennung genutzt werden.

Die US 3,954,228 B1 offenbart einen Lenkflugkörper, der nach vorne in Richtung auf ein Luftziel aktiv IR-Strahlung aussendet und die reflektierte IR-Strahlung zum Lenken des Lenkflugkörpers zum Ziel nutzt. Durch IR-Reflektoren auf einem Flugzeug kann - bei geeigneter Anordnung - eine Freund-Feind-Kennung in der durch die Reflektoren reflektierten Strahlung erzeugt werden.

In der US 5,748,138 B1 ist beschrieben, wie eine Freund-Feind-Kennung in langwelliger Hintergrundstrahlung verborgen wird.

Es ist eine Aufgabe der Erfindung, ein schnell wirkendes Verfahren zum Schützen eines Fahrzeugs durch eine Freund-Feind-Erkennung anzugeben.

Diese Aufgabe wird durch die Merkmale der unabhängigen Ansprüche 1, 6, 16 und 18 gelöst. Erfindungsgemäß empfängt das Fluggerät ein Signal mit einer Abwehrmaßnahme, innerhalb derer eine Freundkennung ist, erkennt die Freundkennung als solche und bricht aufgrund des Erkennens den Angriff ab, wobei das Signal mit der Freundkennung in einem Frequenzbereich empfangen wird, in dem der Trackingsensor des Fluggeräts sensitiv ist, wobei das Signal vom Trackingsensor empfangen und von der Steuereinheit verarbeitet wird.

Dadurch, dass bereits das angreifende Fluggerät die Freundkennung als solche erkennt, kann ein Angriff sehr schnell abgebrochen werden. Beispielsweise kann ein bereits sehr weit fortgeschrittener Angriff noch kurz vor dem Auslösen einer Sprengladung abgebrochen werden. Der Schutz mittels Freund-Feind-Erkennung wird insofern realisiert, als dass das zuvor vom Fluggerät als Feind klassifizierte Fahrzeug aufgrund der Identifizierung der Freundkennung nun als Freund umklassifiziert wird, sodass der Angriff abgebrochen werden kann.

Das angegriffene Fahrzeug sendet die Freundkennung aus. Auf diese Weise kann eine sehr schnelle Kommunikation zwischen Angegriffenem und Angreifer gewährleistet werden, sodass ein Angriff zügig abgebrochen werden kann. Wenn das angreifende Fluggerät die Freundkennung als solche erkennt, kann es den Angriff abbrechen, sodass das Fahrzeug geschützt ist.

Damit die Freundkennung vom angreifenden Fluggerät empfangen werden kann, muss sie von einem Sensor des Fluggeräts empfangen werden, also in einem Frequenzbereich gesendet werden, in der ein empfangender Sensor des angreifenden Fluggeräts sensitiv ist. Hierfür kann das Fluggerät mit einem entsprechenden Freundsensor ausgestattet werden.

Allerdings sollte das Aussenden eines Freundsignals gut getarnt werden, denn ansonsten könnte ein feindliches Fahrzeug im Gefecht das Freundsignal von einem anderen Fahrzeug empfangen und es sich selbst zu eigen machen. Wenn dann das feindliche Fahrzeug angegriffen wird, kann es mit dem Aussenden des ausspionierten Freundsignals den Angreifer täuschen und den an sich richtigen Angriff erfolgreich abwehren.

Um dies zu vermeiden, ist es vorteilhaft, wenn das Freundsignal in einer Weise gesendet wird, wie üblicherweise eine Abwehrmaßnahme eines Fahrzeugs gegen einen Angriff gesendet wird. Eine Abwehrmaßnahme kann durch einen Sender erfolgen, einen im oder am Fahrzeug befestigten Sender, beispielsweise durch einen Störlaser, ein IR-Jammer oder ein Störradarsender, oder einen abgeworfenen Sender, wie einen Täuschkörper. Dadurch dass die Freundkennung in einem solchen Abwehrsignal verborgen wird, wird es von beobachtenden Dritten als übliche Abwehrmaßnahme wahrgenommen werden, ohne dass das Freundsignal innerhalb der Abwehrmaßnahme erkannt wird. Ein Täuschkörper kann ein Flare, also ein pyrotechnisches Element, oder ein Radarkörper sein, der aktiv aussendet oder passiv Radarstrahlung reflektiert. Auch ein abgeworfener Sender zum Aussenden des Freundsignals kann als Täuschkörper verstanden werden, insbesondere wenn er mit mehreren andern Täuschkörpern abgeworfen wird.

Solche Abwehrmaßnahmen haben die Gemeinsamkeit, dass sie in einem Frequenzbereich stattfinden, in dem der Trackingsensor des angreifenden Fluggeräts sensitiv ist. Beispielweise wird ein IR-Suchkopf durch einen IR-Störlaser gestört oder durch abgeworfene Täuschkörper in Form von Flares getäuscht. Das Störsignal taucht in der Auswertung des Trackingsensors durch die Steuereinheit des Fluggeräts auf und erschwert oder verhindert gegebenenfalls eine derart korrekte Auswertung, durch die ein erfolgreicher Angriff noch möglich wäre.

Um eine gute Tarnung der Freundkennung zu erreichen, wird das Signal mit der Freundkennung in einem Frequenzbereich ausgesendet, in dem üblicherweise Abwehrmaßnahmen gegen einen Angriff stattfinden. Da sich solche Maßnahmen üblicherweise gegen die Tätigkeit des Trackingsensors richten, wird das Signal mit der Freundkennung in einem Frequenzbereich ausgesendet, in dem der Trackingsensor des Fluggeräts sensitiv ist. Analog wird das Signal mit der Freundkennung in einem Frequenzbereich empfangen, in dem der Trackingsensor des Fluggeräts sensitiv ist. Dieser Frequenzbereich wird im Folgenden als Sensorkanal bezeichnet.

Die Auswertung einer Freundkennung im Sensorkanal kann auf mehrere Weisen erfolgen. Wenn der Trackingsensor ein hochspezialisierter Sensor ist, kann es vorteilhaft sein, die Freundkennung mit einem anderen Freundsensor zu empfangen. Wenn beispielsweise der Trackingsensor über einen weiten Frequenzbereich integriert, um sehr sensitiv auch weit entfernte Fahrzeuge aufspüren zu können, kann es schwierig sein, eine Freundkennung mit einem scharfen Frequenzpeak durch den Trackingsensor aufzulösen. Die Freundkennung liegt zwar im Sensorkanal, wird also auch vom Trackingsensor empfangen, wird von diesem aber nicht ausreichend zuverlässig aufgelöst. Ein auf die Freundfrequenz spezialisierter Sensor wird die Freundkennung jedoch zuverlässig auflösen, sodass die Steuereinheit sie als solche identifizieren kann.

In anderen Worten, es ist möglich, dass das Fluggerät zusätzlich zum Trackingsensor einen Freundsensor aufweist, der zum Empfangen der Freundkennung vorbereitet ist. Das Trackingsignal, also die IR- oder Radarstrahlung der Fahrzeugsignatur, und die Freundkennung, also das Signal mit dem Code, der das Fahrzeug als Freund des Fluggeräts beschreibt, können also von unterschiedlichen Sensoren empfangen und verarbeitet werden. Eine solche Konfiguration kann den Vorteil haben, dass eine Trackingauswertung der Daten des Trackingsensors nicht von einer Auswertung des Freundsignals beeinflusst oder sogar beschränkt wird.

In einem zweiten Fall wird vom gesamten Frequenzspektrum des Trackingsensors, also dem Sensorkanal, nur ein Teil für das Tracking des Fahrzeugs verwendet. Beispielsweise filtert ein Spektralfilter einen schmalen Frequenzbereich heraus, der für die Freund-Feind-Erkennung verwendet wird. Der restliche Bereich kann für das Tracking verwendet werden. Der Sensorkanal wird also unterteilt in einen Freundkanal, in dem die Freundkennung gesucht wird, und einem Trackingkanal, der für das Tracking verwendet wird.

In anderen Worten: Der Frequenzbereich, in dem der Trackingsensor sensitiv ist, kann verhältnismäßig breit sein, insbesondere bei einem Infrarotsensor (IR-Sensor) zur Erkennung einer IR-Signatur, um durch eine Integration über einen breiten Frequenzbereich eine hohe örtliche Auflösung zu erhalten. Demgegenüber kann es ausreichend sein, die Freundkennung deutlich schmalbandiger zu senden. Bei einer schmalbandigen Freundkennung besteht die Möglichkeit, den Freundkanal, also den Frequenzbereich, in dem die Freundkennung gesendet wird, neben den Trackingkanal, also den Frequenzbereich, der zum Tracking verwendet wird, zu setzen, mit oder ohne einen Überlapp der beiden Kanäle. Mittels Kanaltrennung, beispielsweise durch einen Strahlteiler oder Filter, können beide Kanäle getrennt werden und getrennt ausgewertet werden.

In einem dritten Fall überlappen sich Trackingkanal und Freundkanal. Beispielsweise liegt der Freundkanal vollständig im Trackingkanal. Mit der Auswertung der Signale des Trackingsensors durch die Steuereinheit zum Zwecke des Trackings kann auch das Freundsignal identifiziert werden. Das Signal mit der Freundkennung kann im Frequenzbereich empfangen werden, der zum Tracking des Fahrzeugs verwendet wird. Der Freundkanal und der Trackingkanal liegen insofern über- oder ineinander. Auf diese Weise kann auf eine Kanalteilung verzichtet werden, und die Erkennung der Freundkennung kann aus den gleichen Daten erfolgen, die zum Tracking verwendet werden.

Im zweiten und dritten Fall kann auf einen zusätzlichen Freundsensor verzichtet werden, da das Signal vom Trackingsensor empfangen wird. Dies beinhaltet im dritten Fall, dass die Steuereinheit aus den Daten des Trackingsensors die Freundkennung als solche erkennt. Eine Freunderkennung kann auf diese Weise in einfacher Form erreicht werden, ohne dass sensorische Änderungen am Fluggerät durchgeführt werden müssten.

Alle drei Möglichkeiten sind sinnvoll und insofern vorteilhaft, als dass das Signal mit der Freundkennung in einem Frequenzbereich gesendet beziehungsweise empfangen wird, in dem der Trackingsensor des Fluggeräts sensitiv ist, also üblicherweise auch Störmaßnahmen stattfinden, sodass das Freundsignal hierdurch getarnt bleibt.

Das Fahrzeug kann ein Bodenfahrzeug sein, wie ein Radfahrzeug oder Kettenfahrzeug. Es kann jedoch auch ein Wasserfahrzeug oder Luftfahrzeug sein. Eine Freund-Feind-Erkennung kann in einem militärischen Sinn verstanden werden, in dem zwischen einem Freund und einem Feind unterschieden wird, wobei ein Feind bekämpft und ein Freund nicht bekämpft werden soll. Eine Erkennung geschieht, wenn ein zuvor als Feind klassifiziertes Objekt als Freund erkannt wird. Das Fluggerät kann ein bemanntes oder unbemanntes Luftfahrzeug sein, eine Rakete, ein Lenkflugkörper, eine Lenkbombe oder ein anderes in der Luft lenkbares Gerät.

Ein Trackingsystem kann ein System sein, dass zur Erfassung und Verfolgung eines Ziels, beispielweise eines Fahrzeugs, ausgeführt ist. Es kann im Spektralbereich des Infrarot, der sichtbaren Strahlung oder der Radarstrahlung sensitiv sein, also Strahlung aus einem oder mehreren der genannten Spektralbereiche verwenden, um das Ziel zu erkennen und zu verfolgen. Ein Trackingsensor kann ein in zumindest einem solchen Spektralbereich sensitiver Sensor sein, zweckmäßigerweise ein bildgebender Sensor. Das Trackingsystem enthält eine Steuereinheit, die insbesondere Daten des Trackingsensors auswertet und ein Tracking, also eine Zielverfolgung, durchführt.

Die Sensitivität des Trackingsensors kann denjenigen Spektralbereich umfassen, in dem in den Trackingsensor einfallende Strahlung ein auswertbares Signal des Trackingsensors erzeugt. Insbesondere kann die Sensitivität des Trackingsensors denjenigen Spektralbereich umfassen, bei dem aus diesem Spektralbereich in den Trackingsensor einfallende Strahlung ein Signal des Trackingsensors erzeugt, das von der Steuereinheit ausgewertet und zum Tracken verwendet wird.

Ein Angriff kann als abgebrochen angesehen werden, wenn eine Aktion des Fluggeräts so ausgeführt wird, dass das Fahrzeug nicht mehr angegriffen wird, beispielsweise wird das Fluggerät so gelenkt, dass es das Fahrzeug nicht mehr ansteuert. Oder das Fluggerät zerstört sich selbst, bevor es das Fahrzeug erreicht.

Damit das Fluggerät das Fahrzeug ansteuern kann, ist es zweckmäßig, wenn das Fluggerät das Fahrzeug mit dem Trackingsensor erfasst, also als Ziel erkennt. Ferner ist ein Tracking sinnvoll, also eine Verfolgung des Ziels durch Relativbewegungen zwischen Fluggerät und Fahrzeug hindurch. Ein Tracking kann durch ein elektronisches Verfolgen einer Signatur des Fahrzeugs, beispielsweise einer IR-Signatur oder eines Radarreflexes, durch mehrere das Fahrzeug abbildende Bilder erfolgen. Das Fluggerät kann das Fahrzeug anhand von Daten des Trackingsensors ansteuern. Dies kann beinhalten, dass das Fluggerät seine Flugrichtung an Bewegungen des Fahrzeugs nachführt, die Flugrichtung also durch Bewegungen des Fahrzeugs beeinflusst wird.

Die Steuereinheit des Fluggeräts kann aus den Daten des Trackingsensors oder eines anderen Sensors die Freundkennung des Fahrzeugs als solche erkennen. Hierfür ist in der Freundkennung zweckmäßigerweise ein Code enthalten, der im Fluggerät als Freundkennung hinterlegt ist und anhand dessen die Steuereinheit die Freundkennung als solche erkennen kann. Das Fluggerät kann insofern die Freundkennung auswerten und das Fahrzeug als Freund klassifizieren. Das Fluggerät kann in Abhängigkeit von dem Erkennen einen bereits eingeleiteten Angriff auf das Fahrzeug abbrechen.

Je nach Art des Sensorkanals kann die Freundkennung beispielsweise ein IR-Signal oder ein Radarsignal sein. Im Falle eines IR-Signals kann ein Freundsender beispielsweise ein Störlaser oder ein Flare sein. In einer vorteilhaften Ausführungsform der Erfindung ist das Signal mit der Freundkennung ein amplitudenmoduliertes IR-Signal, aus dessen Amplitudenmodulation die Freundkennung als solche erkannt wird. Das Signal kann insofern aus einer vordefinierten Amplitudenschwankung erkannt werden, beispielweise aus einer Abfolge aus Lichtblitzen, zweckmäßigerweise innerhalb eines tarnenden Hintergrundsignals, wobei in diesem Zusammenhang auch der Infrarotbereich als "Licht" bezeichnet wird. Beispielsweise wird einem Störlaserstrahl das Freundsignal aufmoduliert, sodass dieser in seiner Stärke vordefiniert zu- und abnimmt.

Eine weitere Möglichkeit besteht darin, dass das Signal mit der Freundkennung ein frequenzmoduliertes IR-Signal ist, aus dessen Frequenzmodulation die Freundkennung als solche erkannt wird. Um beim Beispiel des Störlasers beziehungsweise IR-Jammers zu bleiben, kann dem Störstrahl ein Farbcode aufmoduliert werden, beispielsweise ein Strahl gleichbleibender Amplitude aber wechselnder Farbe beziehungsweise Frequenz. Der Frequenzwechsel kann das Freundsignal beinhalten, das somit eindeutig erkennbar ist. Amplituden- und Frequenzmodulation können selbstverständlich auch gemeinsam verwendet werden.

Das Freundsignal muss jedoch nicht zeitlich moduliert sein, wie in den beiden obigen Fällen dargestellt ist. Es ist auch möglich, dass die Freundkennung eine vorbestimmte Zusammenstellung von Frequenzbereichen umfasst. Eine solche vordefinierte Spektralzusammenstellung kann unabhängig von einer zeitlichen Modulation die Freundkennung beinhalten. Beispielsweise enthält IR-Strahlung mehrere scharfe Spektralpeaks, deren Zusammenstellung - und gegebenenfalls auch deren Amplitude zueinander - die Freundkennung zumindest teilweise beinhalten. Die Auswertung der einzelnen Frequenzbereiche kann mithilfe zumindest eines Frequenzfilters geschehen, beispielsweise eines Spektralfilters im IR-Bereich und/oder visuellen Bereich. Das Trackingsystem kann diese Frequenzbereiche - insbesondere getrennt vom Trackingkanal - einzeln auswerten, wobei hierunter eine spektrale Auflösung der einzelnen Bereiche verstanden werden kann.

Wie beschrieben, kann die Freundkennung von einem Täuschkörper ausgesendet werden, den das angegriffene Fahrzeug abgeworfen hat. Allgemein gesprochen ist es vorteilhaft, wenn die Freundkennung von einem Sender ausgesendet wird, den das Fahrzeug ausgeworfen hat. Empfängerseitig bestehen nun zwei Möglichkeiten: Das Fluggerät empfängt die Freundkennung und unterscheidet nicht, ob diese unmittelbar vom Fahrzeug kommt oder vom abgeworfenen Sender. Oder das Fluggerät erkennt die Freundkennung als von einem Sender ausgesendet, den das Fahrzeug ausgeworfen hat. Wenn beispielsweise ein Flare die Freundkennung aussendet, wird das Fluggerät das Flare als weiteres Fahrzeug beziehungsweise Flugobjekt erkennen, das IR-Strahlung emittiert. Kann das Fluggerät nun erkennen, von welchem der beiden oder mehreren Objekten die Freundkennung kommt, kann es beispielsweise das die Freundkennung aussendende Flare ansteuern anstelle des Fahrzeugs, sodass das Fahrzeug geschützt wird. Gleiches gilt auch für andere Täuschkörper, beispielsweise einen Radarkörper.

Es ist insofern vorteilhaft, wenn das Fluggerät zusätzlich zum Fahrzeug ein weiteres Flugobjekt verfolgt, das das Signal mit der Freundkennung ausstrahlt, und insbesondere das weitere Flugobjekt nach Erkennung der Freundkennung anstelle des Fahrzeugs ansteuert.

Wenn ein Fahrzeug Täuschkörper auswirft, so geschieht das in der Regel so, dass kurz vor dem Einschlag des Angreifers mehrere Täuschkörper in schneller Reihenfolge ausgeworfen werden. Diese strahlen meist mit einer ähnlichen Signatur, in der auch das Fahrzeug abstrahlt. Ein oder mehrere Abwurfparameter können als Codierungsparameter für die Freundkennung verwendet werden. Oder empfängerseitig gesprochen: Es kann zumindest ein Abwurfparameter mehrerer Sender als Codierparameter zur Ermittlung der Freundkennung untersucht werden. Als Abwurfparameter kann verwendet werden: die Anzahl der abgeworfenen Sender, eine Abwurfsequenz der abgeworfenen Sender, also zeitliche Abstände zwischen den einzelnen Abwürfen, Abwurfrichtungen der abgeworfenen Sender und/oder Abwurfgeschwindigkeiten der abgeworfenen Sender, also wie weit sie in einer bestimmten Zeit vom Fahrzeug wegfliegen.

Das Schützen eines Fahrzeugs durch eine Freund-Feind-Erkennung kann in äquivalenter Weise senderseitig und empfängerseitig beschrieben werden, senderseitig durch das Ausgeben der Freundkennung und empfängerseitig als das Erkennen der Freundkennung. Während sich die Erfindung im Bisherigen überwiegend auf das empfängerseitige Erkennen bezog, wird im Folgenden die Erfindung senderseitig beschrieben.

Es ist eine Aufgabe der Erfindung, ein schnell wirkendes Verfahren zum Schützen eines Fahrzeugs durch eine Freund-Feind-Erkennung anzugeben. Diese Aufgabe wird durch ein Verfahren zum Schützen eines Fahrzeugs durch eine Freund-Feind-Erkennung, bei dem das Fahrzeug ein Fluggerät als das Fahrzeug angreifendes Fluggerät klassifiziert und ein Signal mit einer Freundkennung aussendet. Es wird vorgeschlagen, dass erfindungsgemäß das Signal die Freundkennung in einem Frequenzbereich enthält, in dem Trackingsensoren solcher Fluggeräte sensitiv sind, die zur Zerstörung eines Fahrzeugs ausgeführt sind, wobei das Fahrzeug mit einem Sender eine Abwehrmaßnahme ausführt innerhalb derer die Freundkennung ist. Die Freundkennung kann unmittelbar vom Fluggerät empfangen und erkannt, und der Angriff kann sehr schnell abgebrochen werden. Zweckmäßigerweise liegt die Freundkennung in einem Frequenzbereich, in dem der Trackingsensor des Fluggeräts sensitiv ist.

Das Fahrzeug erhält zweckmäßigerweise einen Trigger, um das Signal mit der Freundkennung auszusenden. Ein Trigger kann das Klassifizieren des Fluggeräts als angreifendes Fluggerät sein. Das kann automatisch oder manuell ausgelöst durch einen Bediener erfolgen, der beispielsweise das Aussenden der Freundkennung veranlasst. Eine Klassifizierung als angreifendes Fluggerät kann durch das Erkennen eines Trackens erfolgen. Das Fluggerät kann das Fahrzeug anhand von Daten des Trackingsensors ansteuern. Dies kann beinhalten, dass das Fluggerät seine Flugrichtung an Bewegungen des Fahrzeugs nachführt, die Flugrichtung also durch Bewegungen des Fahrzeugs beeinflusst wird. Dies kann vom Fahrzeug erkannt werden und als Auslöser zum Senden der Freundkennung verwendet werden. Ebenfalls ist es möglich, dass das Fluggerät das Fahrzeug aktiv anstrahlt, beispielsweise mit Radarstrahlung, und das Fahrzeug aus dem Empfang der aktiven Strahlung erkennt, dass es verfolgt wird und dies zum Senden der Freundkennung zum Anlass nimmt. Ebenfalls ist es möglich, dass das Fahrzeug einen Startblitz eines Raketenmotors erkennt und dies als Klassifikation einer Verfolgung durch ein angreifendes Fluggerät nimmt, um die Freundkennung auszusenden.

Als Fluggeräte, die zur Zerstörung eines Fahrzeugs ausgeführt sind, können Fluggeräte mit einem Wirkkörper, also einer Sprengladung zum Zerstören des Fahrzeugs, verstanden werden und/oder Fluggeräte, die zur Kollision mit dem Fahrzeug zu dessen Zerstörung vorbereitet sind.

Das Freundsignal kann von einem IR-Jammer, einem Störlaser oder Radarstrahler ausgesendet werden. Besonders vorteilhaft ist das Auswerfen eines Senders durch das Fahrzeug, der das Signal mit der Freundkennung aussendet. Der Sender kann ein Radarsender oder IR-Sender sein, beispielsweise ein Täuschkörper, wie ein Flare.

Die Freundkennung kann durch nur einen von mehreren Täuschkörpern erzeugt werden. Hierdurch kann die Freundkennung besonders gut getarnt werden. Es ist insofern vorteilhaft, wenn das Fahrzeug mehrere verschiedene Täuschkörper auswirft, die Täuschkörper unterschiedliche Substanzen abbrennen und nur ein Teil der Täuschkörper, insbesondere nur ein einziger Täuschkörper, hierdurch Strahlung aussendet, deren Strahlungsfrequenzen Bestandteil des Freundsignals sind.

Ein Täuschkörper ist zweckmäßigerweise aus Tarngründen ein Körper, der so strahlt, dass seine IR-Signatur mit der eines Fahrzeugmotors oder seine Radarsignatur mit der eines Fahrzeugs verwechselbar ist. Der Täuschkörper kann ein pyrotechnischer Körper sein, dessen Abbrandstrahlung das Freundsignal enthält. Ebenfalls der guten Tarnung halber ist es vorteilhaft, wenn der Sender zusammen mit mehreren Täuschkörpern ausgeworfen wird, die in einer Frequenz strahlen, in der ein Suchkopf des Fluggeräts sensitiv ist.

Es ist auch möglich, dass das Fahrzeug - wie bereits empfängerseitig anfänglich beschrieben - mehrere Sender ausstößt, wobei ein Auswurfparameter, wie deren Ausstoßsequenz, und/oder Leuchtfrequenzen Bestandteil des Freundsignals sein können. Es ist jedoch auch möglich, dass ein einziger Sender mehrere Sendekörper ausstößt. Beispielsweise zerlegt sich ein von mehrerer Flares in mehrere Teile, die jeder für sich strahlen. Ein Flare kann zum Beispiel mehrere Elemente, beispielsweise Scheiben, ausstoßen. Auch hier können ein oder mehrere Auswurfparameter zur Codierung der Freundkennung beitragen. Aber auch verschiedene Strahlungsfrequenzen können zumindest Teil einer Freundcodierung sein. So kann jedes Element in einer oder mehreren voneinander getrennten Frequenzen abstrahlen, wobei, die Frequenzen in ihrer spezifischen Zusammensetzung zumindest Teil der Freundcodierung sind.

Werden ein Sender oder mehrere Sendeelemente ausgestoßen, entweder vom Fahrzeug und/oder von einem ausgeworfenen Sender, können ein oder mehrere der folgenden Parameter Bestandteil der Freundcodierung sein, also des Codes, der die Freundkennung als solche ausmacht. Sendeelemente können Abbrandelemente sein, die im infraroten und/oder visuellen Spektralbereich strahlen.

Amplitude: Mehrere Sendeelemente strahlen zeitgleich oder zeitlich versetzt zueinander mit verschiedener Intensität. Oder nur ein Sender strahlt in seiner Intensität zeitlich so veränderlich, dass die Intensität zumindest zweimal in einem vorbestimmten zeitlichen Verlauf zu- und abnimmt. Es besteht insofern eine Modulation der Abbrandhelligkeit in mehreren verschiedenen Maxima und Minima, deren Verschiedenheit Teil des Freundsignals ist.

Anzahl: Eine vorbestimmte Anzahl von Sendeelementen wird ausgeworfen.

Abwurfsequenz: Mehrere Sender oder Sendeelemente werden in einer zeitlich festgelegten Sequenz abgeworfen und/oder gezündet, sodass ihr Strahlungsbeginn in dieser Sequenz erfolgt. Die Zeitintervalle zwischen Abwürfen beziehungsweise Zündungen sind zweckmäßigerweise unterschiedlich. Weisen die Sender oder Sendeelemente verschiedene Abstrahlfrequenzen auf, so kann die Reihenfolge des Abwurfs beziehungsweise der Zündung festgelegt sein.

Pulsbreite: Mehrere Sender oder Sendeelemente strahlen in zeitlich unterschiedlich breiten Pulsen.

Abstrahlfrequenzen: Mehrere chemische Elemente oder Verbindungen eines Senders strahlen scharfe Spektrallinien, insbesondere im visuellen und/oder nahen Infrarotbereich. Die Stoffe können in die Hauptwirkmasse eines Täuschkörpers beigemischt werden, sodass der Täuschkörper zusätzlich zu seiner regulären Strahlungscharakteristik eine Liniencharakteristik aufweist, die zumindest Teil der Freundkennung ist. Beispielsweise kann der Wirkmasse Lithium, Natrium, Kalium, Rubidium, Cäsium, Calcium, Strontium, Barium, Thallium, Indium, Kupfer, Zink, Blei, Wismut, Selen, Bor, Quecksilber, Yttrium und/oder eine andere seltene Erde einzeln oder als Verbindung beigemischt sein.

Vorteilhafterweise ist die Modulationsfrequenz bei zumindest einem der Parameter Amplitude, Abwurfsequenz und Pulsbreite so hoch, dass einem menschlichen Auge die Amplitudenmodulation des Abbrands verborgen bleibt. Frequenzen höher als 15 Hz, insbesondere höher als 50 Hz sind vorteilhaft.

Anstelle eines Abwurfs eines im infraroten und/oder visuellen Spektralbereich strahlenden Senders kann ein Radarsender abgeworfen werden, der das Signal mit der Freundkennung aussendet. Der Sender kann ein aktiver Sender sein, der aus einer Energiequelle gespeist wird und Radarstrahlen sendet, oder ein passiver Sender, der empfangene Radarstrahlung unverändert oder verändert als Antwortsignal reflektiert.

Bei einem passiven Radarstrahler kann die Freundkennung erzielt werden, indem der Radarsender Trackingstrahlung des Fluggeräts reflektiert und hierbei zumindest ein Strahlungsband innerhalb des Frequenzbereichs der Trackingstrahlung absorbiert. Die Absorption kann ein Bestandteil oder das Freundsignal sein.

Eine weitere Möglichkeit besteht darin, dass der Radarsender Trackingstrahlung des Fluggeräts absorbiert und frequenzverschoben in Richtung zum Fluggerät abstrahlt. Hierbei kann die Frequenzverschiebung ein Bestandteil oder das Freundsignal sein.

Auch eine zeitliche Modulation des Radar-Antwortsignals kommt als Möglichkeit der Freundkennung in Frage. Hierbei kann der Radarsender Trackingstrahlung des Fluggeräts absorbieren - oder bei einem aktiven Sender empfangen - und zeitverschoben in Richtung zum Fluggerät abstrahlen. Die Zeitverschiebung kann ein Bestandteil oder das Freundsignal sein.

Alle diese Details können von einem Radarsender vom Fahrzeug aus durchgeführt werden oder von einem oder mehreren Radarsendern, die vom Fahrzeug abgeworfen werden. Auch wenn Radarsender abgeworfen werden und diese die Freundkennung aussenden, so wird dies als Senden der Freundkennung vom Fahrzeug verstanden.

Bei einer aktiven Radarcodierung ist es vorteilhaft, wenn das Fahrzeug einfallende Radarstrahlung als Auslöser zum aktiven Senden der Freundkennung verwendet. Wenn das Fahrzeug mehrere Radarsender auswirft, ist es vorteilhaft, wenn die auf die Radarsender einfallende gepulste Trackingstrahlung aktive Sendeeinheiten der mehreren ausgeworfenen Radarsender synchronisiert. Jeder Sender kann beispielsweise zumindest eine Sendeeinheit aufweisen. Die mehreren Sendeeinheiten werden durch die einfallende Strahlung synchronisiert.

Um eine Spionage der Freundkennung zu erschweren, ist es vorteilhaft, wenn diese veränderbar ist. Wurde eine Freundkennung verwendet, so können das gleiche oder andere Fahrzeuge mit einer oder mehreren anderen Freundkennungen versehen werden. Empfängerseitig ist ebenfalls eine Änderung der akzeptierten Freundkennung vorteilhaft, sodass eine veraltete Freundkennung nicht mehr als solche akzeptiert wird und nicht mehr zu einem Abbruch des Angriffs führt.

Am einfachsten ist es, wenn die Freundkennung sendeseitig und/oder empfängerseitig programmierbar ist. Eine Programmierung kann eine Veränderung von Softwareinformation sein, die von einem Kennungsprogramm abgearbeitet wird. Es kann aber auch die Veränderung von mechanischen Elementen sein, wie das Verändern einer Sendeantenne für Radarstrahlung oder der Bestückung mit pyrotechnischen Elementen.

Auf diese Weise kann eine Freundkennung von einer früheren anderen Freundkennung in die aktuelle Freundkennung verändert werden. Dies geschieht vor dem Aussenden der Freundkennung, sodass nur die aktuelle Freundkennung ausgesendet wird.

Bei einem pyrotechnischen oder Radar-Sender kann die Veränderung sendeseitig vorgenommen werden, indem ein Behälter, beispielsweise ein Kanister, mit zumindest einem Täuschkörper geöffnet und der Täuschkörper durch einen anderen mit der aktuellen Freundkennung ersetzt wird. So kann ein Flare-Behälter mit einem oder mehreren anderen Flares bestückt werden. Auch eine Bestückung von Radarreflektor-Behältern mit anderen Reflektoren beziehungsweise einer andere Radarflare-Patrone ist möglich und sinnvoll.

Bei einer elektronischen Zündeinheit, die ein oder mehrere pyrotechnische Elemente zündet, ist es vorteilhaft, wenn die Veränderung vorgenommen wird, indem eine Zündeinheit umprogrammiert wird. Weisen mehrere Sender oder Sendeelemente beispielsweise verschiedene Abstrahlfrequenzen auf, so kann die Reihenfolge des Abwurfs beziehungsweise der Zündung verändert werden. Hierdurch kann eine neue Farbcodierung geschaffen werden. Auch vorteilhaft ist eine Veränderung einer Ausstoßsequenz.

Ist keine Umprogrammierung möglich oder gewünscht, kann ein Zünder ausgetauscht werden. Durch eine Veränderung eines Täuschkörperzünders kann beispielsweise ein anderer Zündablauf, wie eine andere Zündreihenfolge oder andere Zeiten zwischen mehreren Zündungen, eingestellt werden.

Selbstverständlich kann auch ein Radarsender durch Umprogrammierung oder mechanische Veränderung verändert werden. So kann eine Veränderung vorgenommen werden, indem eine Radarschaltung umprogrammiert wird. Oder es wird eine Veränderung vorgenommen, indem eine Geometrie eines Radarreflektors verändert wird, wodurch sich seine Abstrahlfrequenz verändert.

Die Erfindung betrifft außerdem ein Fluggerät mit einem Trackingsystem enthaltend einen Trackingsensor und eine Steuereinheit zum Tracken eines anzugreifenden Fahrzeugs, einem Flügelsystem zum fliegenden Ansteuern des Fahrzeugs und einem Wirkkörper zum Zerstören des Fahrzeugs.

Um einen schnellen Abbruch eines Angriffs bei einem Erkennen einer Freundkennung zu ermöglichen, wird vorgeschlagen, dass das Trackingsystem dazu vorbereitet ist, ein Signal mit einer Abwehrmaßnahme zu empfangen, innerhalb derer eine Freundkennung ist, wobei das Signal mit der Freundkennung in einem Frequenzbereich empfangen wird, in dem der Trackingsensor des Fluggerätes sensitiv ist, und wobei die Steuereinheit dazu vorbereitet ist, aus den empfangenen Daten eine Freundkennung des Fahrzeugs als solche zu erkennen und in Abhängigkeit von dem Erkennen einen bereits eingeleiteten Angriff auf das Fahrzeug abzubrechen. Die Freundkennung kann unmittelbar zwischen Fahrzeug und Fluggerät ausgetauscht werden, sodass ein Abbruch des Angriffs sehr schnell erfolgen kann.

Zum Empfangen der Freundkennung kann das Trackingsystem den Trackingsensor verwenden oder einen zusätzlichen Sensor, der auch in dem Frequenzbereich sensitiv ist, in dem der Trackingsensor sensitiv ist. Das Fluggerät kann ein Signal mit einer Freundkennung empfangen, die Freundkennung als solche erkennen und aufgrund des Erkennens den Angriff abbrechen. Hierbei wird das Signal mit der Freundkennung in einem Frequenzbereich empfangen, in dem der Trackingsensor des Fluggeräts sensitiv ist.

Um eine zuverlässige Erkennung der Freundkennung zu erreichen, ist es vorteilhaft, wenn das Trackingsystem einen Frequenzanalysator aufweist, der zum Erkennen von Strahlungsfrequenzen ausgeführt ist. Das Erkennen kann ein Herausfiltern der Frequenzen sein. Die Steuereinheit ist nun vorteilhafterweise zum Erkennen des Freundsignals aus diesen Strahlungsfrequenzen vorbereitet. Der Trackingkanal kann verschieden vom Freundkanal sein

Für ein Tracking kann das Fluggerät eine Optik zum Führen von einfallender Umgebungsstrahlung auf den Trackingsensor enthalten und ein Frequenzfilter, beispielsweise einen Strahlteiler, der zum Auftrennen von Strahlung aus der Optik zum Trackingsensor einerseits und zu einem Freundkennungssensor andererseits vorbereitet ist, wobei die Steuereinheit den Freundkennungssensor zum Erkennen des Freundsignals auswertet.

Senderseitig ist die Erfindung auf ein Sendesystem mit einem Sender gerichtet, umfassend eine Signalabstrahleinheit und eine Codiereinheit, die dazu vorbereitet ist, einem Signal eine Freundkennung aufzuprägen, und umfassend einen Behälter zum Halten des Senders. Der Sender kann aus dem Behälter ausgeworfen werden, sodass eine Tarnung des Senders als Täuschkörper ermöglicht wird.

Um einen zügigen Angriffsabbruch zu ermöglichen, wird vorgeschlagen, dass die Signalabstrahleinheit dazu vorbereitet ist, das Signal in einem Frequenzbereich auszusenden, in dem Trackingsensoren solcher Fluggeräte sensitiv sind, die zur Zerstörung eines Fahrzeugs ausgeführt sind, wobei der Sender dazu vorbereitet ist, mit dem Signal eine Abwehrmaßnahme auszuführen, innerhalb derer die Freundkennung ist.

Je nach Ausführung kann der Sender ein Pyrokörper oder Radarsender sein. Er kann eine Energieversorgungseinheit in Form eines Pyrokörpers oder einer Batterie aufweisen. Die Signalabstrahleinheit kann ein Pyrokörper oder eine Antenne sein. Die Codiereinheit kann die Zusammensetzung eines Pyrokörpers oder eine Auswurfeinheit oder ein Schaltkreis sein. Der Behälter kann ein Auswurfbehälter sein.

Aus dieser Ausführung wird ersichtlich, dass insbesondere bei einem IR-Täuschkörper der Sender eine pyrotechnische Einheit aufweist, die die Signalabstrahleinheit und die Codiereinheit in einer Einheit bildet. Ein Abbrand des Pyrokörpers, also der pyrotechnischen Einheit, erzeugt ein Freundsignal mit der entsprechenden Codierung.

Vorteilhafterweise weist der Behälter eine Auswurfeinheit auf, die zum Auswerfen des Senders aus dem Behälter vorbereitet ist.

Weiter ist es vorteilhaft, wenn der Sender eine Abbrandeinheit mit einer Zusammensetzung aufweist, die im Abbrand ein amplitudenmoduliertes und/oder frequenzmoduliertes IR-Signal aussendet, das das Freundsignal bildet. Die Abbrandeinheit kann Teil einer pyrotechnischen Einheit sein, zum Beispiel eines Flares.

Eine einfache Umprogrammierung der Freundkennung kann erreicht werden, wenn der Behälter mehrere pyrotechnische Sendeeinheiten mit jeweils einem elektronischen Zünder aufweist, die jeweils für ihre pyrotechnische Einheit den Zündzeitpunkt festlegen. Der Zündzeitpunkt ist zweckmäßigerweise ein Zündzeitpunkt nach dem Auswurf.

Vorteilhafterweise sind die Zündzeitpunkte zumindest Teil der Codierung des Freundsignals.

Um eine gute Tarnung zu erreichen, wird zudem vorgeschlagen, dass der Behälter mehrere weitere Täuschkörper zusammen mit dem Sender umschließt.

Bei einem Radarsystem kann der Behälter eine Vielzahl von Radarreflektoren umschließen. Der Sender kann eine elektronische Schaltung aufweisen, die die Codierung der Freundkennung steuert.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen senderseitigen als auch empfangsseitigen Verfahren als auch mit den erfindungsgemäßen Vorrichtungen gemäß den unabhängigen Ansprüchen kombinierbar. So sind senderseitige Verfahrensmerkmale auch als Eigenschaften des entsprechenden empfangsseitigen Verfahrens und andersherum zu sehen. Außerdem sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein Luftfahrzeug, das von einem Lenkflugkörper angegriffen wird und das zu seinem Schutz Täuschkörper ausgeworfen hat,
- FIG 2: einen Behälter, der sechs teils verschiedene Täuschkörper ausgestoßen hat,
- FIG 3: einen Behälter, der eine Serie Täuschkörper ausgestoßen hat, von denen einer eine andere Strahlungscharakteristik hat als die übrigen,
- FIG 4: einen Behälter, der eine Serie Täuschkörper ausgestoßen hat, von denen einer mehrere Sendeelemente ausgeworfen hat,
- FIG 5: einen Behälter, bei dem ein Sendeelement ausgetauscht wird, und
- FIG 6: einen Behälter, der eine Vielzahl von Radarreflektoren ausgestoßen hat, von denen manche mit passiven Radarmodifikatoren ausgestattet sind.

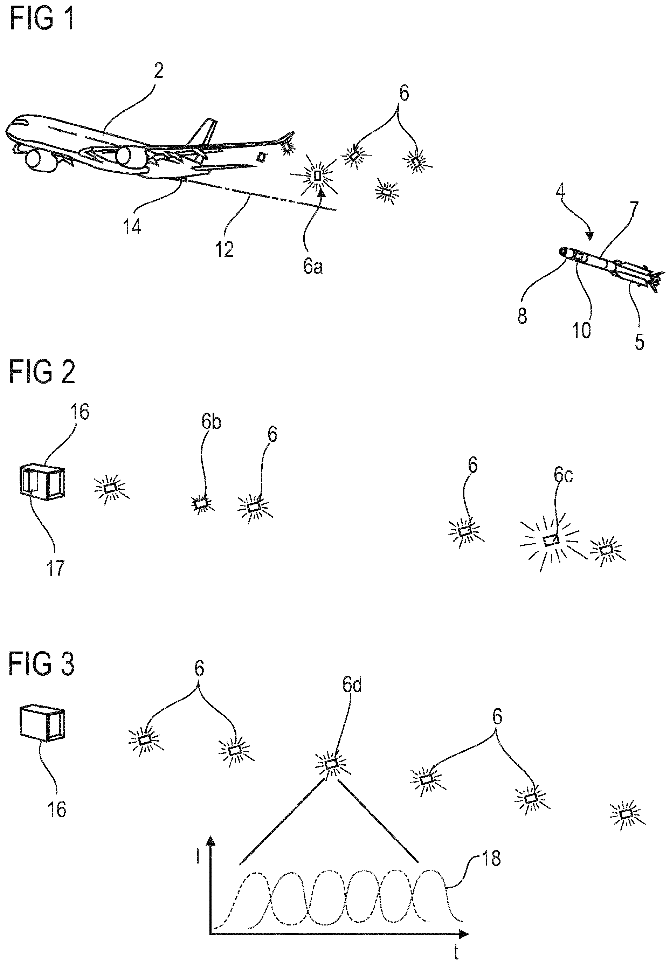

FIG 1 zeigt ein Fahrzeug 2 in Form eines Luftfahrzeugs, das während seines Flugs von einem Fluggerät 4 in Form eines Lenkflugkörpers angegriffen wird. Anstelle eines Flugzeugs kann das Fahrzeug 2 auch ein Rad- oder Kettenfahrzeug oder ein Wasserfahrzeug sein, das angegriffen wird. Im gezeigten Ausführungsbeispiel ist das Fahrzeug 2 beispielsweise gerade von einem Flugplatz in der Nähe einer Metropole gestartet und wurde von einem Luftraumüberwachungsradar aufgrund einer angespannten Lage fälschlicherweise als angreifendes Luftfahrzeug klassifiziert, das eine Bedrohung für die Metropole darstellt. Eine Kommandozentrale hat den Lenkflugkörper gestartet, der von einem Luftleitradar zum Flugzeug geführt wurde. Nach Erreichen eine bestimmten Nähe hat ein Suchkopf des Fluggeräts 4 das Fahrzeug 2 aufgefasst und eine Steuereinheit des Fluggeräts 4 hat anhand von Daten des Suchkopfs eine Infrarotabbildung des Fahrzeugs 2 getrackt, sodass das Fluggerät 4 das Fahrzeug 2 nun selbständig mit eine Flügelsystem 5 lenkend bis zur Detonation einer Wirkladung seines Wirkkörpers 7 direkt neben dem Fahrzeug 2 verfolgt. Aufgrund der Fehleinschätzung der Kommandozentrale droht eine Katastrophe, indem ein Großraumflugzeug durch einen freundlichen Lenkflugkörper abgeschossen wird. In der Kommandozentrale ist der Irrtum noch unerkannt.

Etwa fünf Sekunden vor dem Impact hat eine Überwachungseinheit des Fahrzeugs 2 das anfliegende Fluggerät 4 als eine Bedrohung erkannt, indem es das Fluggerät 4 als angreifend klassifiziert hat, und begonnen, eine Freundkennung per Funk auszusenden. Die Freundkennung wird etwa zwei Sekunden später vom Feuerleitradar als solche identifiziert und als Warnung an die Kommandozentrale weitergeleitet. Gleichzeitig prüft das Feuerleitradar die Herkunft der Freundkennung, um zweifelsfrei festzustellen, dass sie vom angegriffenen Fahrzeug 2 stammt und nicht von einer den Angriff störenden Einheit. Erst bei klarer Identifizierung der Freundkennung vom Fahrzeug 2 ist das Feuerleitradar autorisiert, den Angriff selbständig abzubrechen. Dieser Vorgang benötigt etwa fünf Sekunden, sodass er zu lange dauert, um das Fahrzeug 2 zu schützen. In der Kommandozentrale wird die Warnung von einem Bediener etwa drei Sekunden nach Eintreffen korrekt eingeschätzt, der jedoch eine ganze Weile Zeit benötigt, um Befehle zum Abbruch des Angriffs auszugeben. Auch dieser Vorgang dauert zu lange, um das Fahrzeug 2 noch zu retten.

Zeitgleich mit dem Absetzen der Freundkennung per Funk hat das Fahrzeug 2 mehrere Sender 6 in Form von pyrotechnischen Täuschkörpern ausgeworfen. Die Täuschkörper sind brennende Flares. Auch andere abbrennende Sender 6 sind möglich. Insgesamt wurden sechs Sender 6 in einem Abstand von jeweils 0,2 Sekunden ausgestoßen und beim Ausstoß gezündet, wobei auch eine beliebige andere Anzahl Sender 6 in anderen Sequenzen ausgestoßen werden kann. Bis zur vollen Entfaltung ihrer Strahlung benötigen die Sender 6 wenige Zehntelsekunden, sodass bei der in FIG 1 dargestellten Situation beispielsweise drei Sekunden vor dem Impact die ersten vier Sender 6 bereits voll leuchten, die letzten beiden bauen ihre Strahlung noch auf.

Einer der Sender 6a unterscheidet sich von den übrigen Sendern 6. Im Folgenden ist das Bezugszeichen 6 für alle Sender vergeben und spezielle Sender 6a, 6b, usw. sind mit angehängten Bezugsbuchstaben versehen. Ist nur die Bezugsziffer 6 genannt, bezieht sich die Nennung auf alle Sender 6, 6a, 6b, usw., es sei denn, anderes geht aus der Beschreibung hervor, beispielsweise durch die Formulierung "die anderen Sender 6".

Der Sender 6a ist mit einer pyrotechnischen Ladung ausgestattet, die zwar im Wesentlichen identisch zu der der anderen Sender 6 ist, der jedoch Lithium-, Kalium- und Yttrium-Verbindungen zugemischt wurden. Das Strahlungsspektrum dieses Senders 6a enthält daher eine Vielzahl von charakteristischen Strahlungskennlinien im Bereich zwischen 250 nm und 1.250 nm, die die anderen Sender 6 nicht ausstrahlen. Dies ist in FIG 1 durch längere Strahlungslinien des Senders 6a angedeutet, die das Signal 12, das die Freundkennung beinhaltet, zeigen soll. Für das Auge ist der Unterschied in den Spektren der Sender 6, 6a nicht sichtbar, da sie alle gleich hell und im Mittel in der gleichen Farbe abbrennen.

Auch für einen üblichen Suchkopf sind die spektralen Unterschiede der Sender 6 nicht erkennbar. Zwar liegen die Spektrallinien im Sensorkanal, also in demjenigen Spektralbereich, in dem der Trackingsensor des Fluggeräts 4 sensitiv ist. Doch da übliche Trackingsensoren über weitgehend den gesamten erfassten Teil des Infrarotspektrums integrieren und nicht spektral auflösen können, bleibt dem Trackingsensor die Strahlungsanomalie des Senders 6a verborgen. Im üblichen Gebrauch kann der Sender 6a daher nicht auffallen. Da er sich auch äußerlich nicht von den übrigen Sendern 6 unterscheidet, bleibt sein Vorhandensein unter normalen Umständen unentdeckt.

Das Fluggerät 4 ist jedoch mit einem Trackingsystem 8 in seinem Suchkopf ausgestattet, das im optischen Weg der Suchkopfoptik einen Strahlteiler aufweist, der einen Teil des von der Optik gebündelten Spektrums, einen Freundkanal, auf einen separaten Detektor umleitet, der zur spektralen Auflösung des Freundkanals vorbereitet ist. Dort wird das Spektrum auf mehrere vordefinierte Linien untersucht. Werden diese Spektrallinien erkannt, wird deren Intensität mit der mittleren Intensität des gesamten Spektrums verglichen. Übersteigt die Linienintensität einen vorbestimmten Quotient, so gilt die Freundkennung, die aus diesen Spektrallinien besteht, als erkannt. Diese Erkennung erfolgt etwa 2,5 Sekunden vor dem Impact.

Die Steuereinheit 10, die die Auswertung des Spektrums vorgenommen hat, gibt den Befehl zum Abbruch des Angriffs. Beispielsweise wird der Sender 6a angeflogen und bei dessen Erreichen wird für eine vorbestimmte Zeitdauer, beispielsweise vier Sekunden, geradeaus weitergeflogen, bevor der Wirkkörper des Fluggeräts 4 gezündet und so außerhalb der Gefahrenzone für das Fahrzeug 2 zur Detonation gebracht wird. Oder der Wirkkörper wird bei Erreichen des Senders 6a oder bereits sofort nach Erkennen der Freundkennung gezündet. Das Fahrzeug 2 hat den Angriff auf diese Weise unbeschadet überstanden.

In FIG 1 ist eine alternative Aussendung eines Signals 12 mit einer Freundkennung dargestellt. Hierfür ist das Fahrzeug mit einem fest verbauten Sender ausgerüstet, im gezeigten Ausführungsbeispiel mit einem Störlaser 14. Dieser strahlt das anfliegende Fluggerät 4 nach Erkennen des Fluggeräts 4 als angreifendes Fluggerät 4 mit IR-Störstrahlung an, um den Suchkopf des Fluggeräts 4 so zu stören, sodass das Tracken des Fahrzeugs 2 durch das Trackingsystem 8 unterbrochen wird. Die ausgesendete Laserstrahlung enthält neben dem üblichen Störanteil auch einen Signalanteil, auf den eine Freundkennung aufmoduliert wird. Dies ist in FIG 1 durch die unterbrochene Linie des Signals 12 angedeutet, die die Freundkennung darstellen soll. Beispielsweise wird Strahlung im Frequenzbereich, in dem Trackingsensoren solcher Fluggeräte 4 sensitiv sind, die zur Zerstörung eines Fahrzeugs 2 ausgeführt sind, mit der Freundkennung ausgesendet. Deren Frequenzbereich unterscheidet sich unter Umständen nicht von dem der Störstrahlung, doch die Modulation erzeugt den Unterschied. Beispielsweise ist das Störsignal 12 amplitudenmoduliert, enthält also Signalteile verschiedener Amplituden. Oder das Signal 12 ist pulsbreitenmoduliert, enthält also Strahlungspulse verschiedener zeitlicher Breiten. Oder das Signal 12 ist frequenzmoduliert und enthält Spektrallinien, deren Frequenzen zusammen die Freundkennung ergeben.

Empfängerseitig kann die Erkennung des Freundsignals 12 wie oben beschrieben erfolgen. Oder die Freundkennung wird mit dem Trackingsensor erfasst, der die Amplituden- oder Pulsbreitenmodulation auflösen und als Daten an die erkennende Steuereinheit 10 weitergeben kann. Beispielsweise "blinkt" der Sendestrahl in vorgegebener Weise, die sich oberflächlich betrachtet nicht von einem "Blinken" eines üblichen Störlasers unterscheidet. Auf einen Spektralfilter, beispielsweise einen Strahlteiler, kann verzichtet werden.

Bei der Darstellung aus FIG 1 bleibend, kann der Sender 6a auch anders als beschrieben eine Freundkennung aussenden. Beispielsweise enthält die pyrotechnische Ladung des Senders 6a zwar keine spektral anderen Stoffe als die der anderen Sender 6. Sie kann aber ein anderes Abbrandverhalten zeigen, das in einem oder mehreren Abbrandparametern die Freundkennung enthält. Beispielsweise strahlt der Sender 6a in mehreren Pulsen mit den Parametern Pulsamplituden - also Helligkeiten, Pulsbreiten, Abstände zwischen den einzelnen Pulsen und Anzahl der Pulse. Einer der Parameter oder eine Kombination der Parameter kann die Freundkennung bilden. Empfängerseitig kann das Freundsignal im Trackingkanal empfangen werden, da sich ihr Spektrum nicht von dem der anderen Sender 6 unterscheiden muss.

Um der Allgemeinheit der Erfindung Genüge zu tun, sollte erwähnt werden, dass es auch möglich ist, anstelle der mehreren Sender 6 nur den Freundsender 6a auszuwerfen oder im Falles des Störlasers 14 auf Störstrahlung zu verzichten und nur die Freundkennung zu senden. Der Erkennung der Freundkennung durch den Fluggerät 4 tut dies keinen Abbruch, da zeitgleiche Störsignale 12 durch einen fest eingebauten oder abgeworfenen Sender 6 im Wesentlichen der Verschleierung des Aussendens der Freundkennung dienen und nicht unbedingt zur Erkennung des Freundsignals beitragen.

FIG 2 zeigt ein weiteres Ausführungsbeispiel, das in weiten Teilen dem aus FIG 1 gleich ist. Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Um nicht bereits Beschriebenes mehrfach ausführen zu müssen, sind generell alle Merkmale eines vorangegangenen Ausführungsbeispiels im jeweils folgenden Ausführungsbeispiel übernommen, ohne dass sie erneut beschrieben sind, es sei denn, Merkmale sind als Unterschiede zu dem oder den vorangegangenen Ausführungsbeispielen beschrieben.

In FIG 2 gezeigt ist ein Behälter 16, der im Fahrzeug 2 verbaut oder darin befestigt ist. Dies kann auch im Beispiel aus FIG 1 so sein. Der Behälter 16 enthält eine nicht dargestellte Auswurfeinheit 17, die nach Erhalt eines Steuerbefehls, beispielsweise von einer Überwachungseinheit, einen oder mehrere Sender 6 auswirft.

Die Freundkennung kann in einer Abwurfsequenz der Sender 6 enthalten sein. Beispielsweise werden mehrere insbesondere identische Sender 6 in einer vorbestimmten zeitlichen Sequenz ausgeworfen und hierbei gezündet. Die Freundkennung ist nun aus einer zeitlichen Zündsequenz der Sender ermittelbar und auch aus einem räumlichen Abstand der Sender 6 zueinander, vorausgesetzt, sie werden alle mit gleichem Schwung aus dem Behälter 16 ausgeworfen.

Bei dem Beispiel aus FIG 2 ist zwischen den ersten beiden Sendern 6 ein kleiner zeitlicher beziehungsweise räumlicher Abstand, dann folgt ein mittlerer, dann ein großer, dann ein kleiner und dann wieder ein mittlerer. Diese Abstände, also zeitliche Zündabstände oder räumliche Abstände, können die Freundkennung enthalten. Ebenfalls möglich ist es, dass einer oder mehrere der Sender 6 sich von den anderen unterscheiden. Bei dem Beispiel aus FIG 2 unterscheiden sich die beiden Sender 6b und 6c von den übrigen Sendern 6 dadurch, dass sie heller strahlen (Sender 6c) beziehungsweise weniger hell strahlen (Sender 6b), was in FIG 2 durch die unterschiedlich langen Strahlungsstriche bei den Sendern 6, 6b, 6c angedeutet ist. Die Freundkennung kann hierbei nicht nur aus den verschiedenen Helligkeiten an sich, sondern auch aus der Reihenfolge der Helligkeiten bestehen, hier mittel - hell - mittel - mittel - dunkel - mittel.

Um eine Verschiedenartigkeit der Sender 6 zu erkennen, ist es notwendig, dass das Fluggerät 4 beziehungsweise dessen Steuereinheit 10 die einzelnen Sender 6 voneinander unterscheiden kann und deren Strahlungscharakteristika einzeln auflösen kann. Da das Trackingsystem 8 dazu eingerichtet ist, eine Infrarotquelle zu tracken und auch in der Lage ist, mehrere Infrarotquellen einzeln zu tracken, können die einzelnen Quellen auf ihre Strahlungsparameter ausgewertet werden. Das heißt, dass die Parameterwerte oder -verläufe den einzelnen Quellen zugeordnet werden können. Bei dem Beispiel aus FIG 2 erkennt die Steuereinheit 10 daher sechs unterschiedliche Quellen und deren unterschiedliche Strahlungsintensität sowie deren Anordnung im Raum und auch deren Zündzeitpunkte. Aus diesen Parametern kann sich die Freundkennung in beliebiger Kombination zusammensetzen.

Die Zündung der Sender 6 kann beim Auswurf erfolgen oder durch Zünder gesteuert werden, wobei zweckmäßigerweise jeder ausgeworfene Sender 6 einen eigenen Zünder aufweist, zumindest der oder die Freundsender 6b, 6c. Auf diese Weise kann die Zündung der Sender 6 individuell und unabhängig vom Abwurf gesteuert werden, wodurch ein weiterer Parameter als Bestandteil der Freundkennung ermöglicht wird, nämlich eine zeitliche Reihenfolge der Zündung.

Bei dem Ausführungsbeispiel aus FIG 3 werden wiederum eine Anzahl von Sendern 6 von der Auswurfeinheit 17 des wie in FIG 2 ausgeführten Behälters 16 ausgeworfen. Von diesen unterscheidet sich einer von den übrigen dadurch, dass er zumindest einen Stoff enthält, der zeitlich fluktuierend abbrennt. Hierdurch entsteht eine Helligkeitsschwankung des Abbrands des Senders 6d. Der Stoff kann zudem anders beschaffen sein als der übrige Abbrandstoff insofern, als sich sein Strahlungsspektrum von dem des übrigen Stoffs unterscheidet. Während beispielsweise der Grundstoff gleichmäßig abbrennt, fluktuiert die Helligkeit des Signalstoffs. Werden beide Spektren im Trackingsystem 8 getrennt analysiert, so kann die Fluktuation des Signals als Freundkennung erkannt werden.

Bei dem Beispiel aus FIG 3 enthält der Sender 6d zwei Signalstoffe, die relativ zueinander so zusammengesetzt sind, dass sie alternierend fluktuierend strahlen. Wenn der eine Signalstoff hell strahlt, strahlt der andere dunkel und andersherum. In FIG 3 sind die Strahlungsverläufe 18 der Strahlungsintensitäten der beiden Signalstoffe über die Zeit in einem Diagramm mittels einer gestrichelten Linie (Signalstoff 1) und einer gepunkteten Linie (Signalstoff 2) dargestellt. Zu sehen ist die alternierende Fluktuation der Strahlungsintensitäten. Diese Kombination aus zwei verschiedenen Spektren, insbesondere mit alternierender Fluktuation also Amplitudenveränderung, bildet hier die Freundkennung. Da die addierte Strahlungsintensität im Mittel im Wesentlichen kontinuierlich verläuft, ist die Fluktuation für einen Beobachter, beispielsweise einen Suchkopf, der die Spektren nicht getrennt betrachtet, nicht sichtbar.

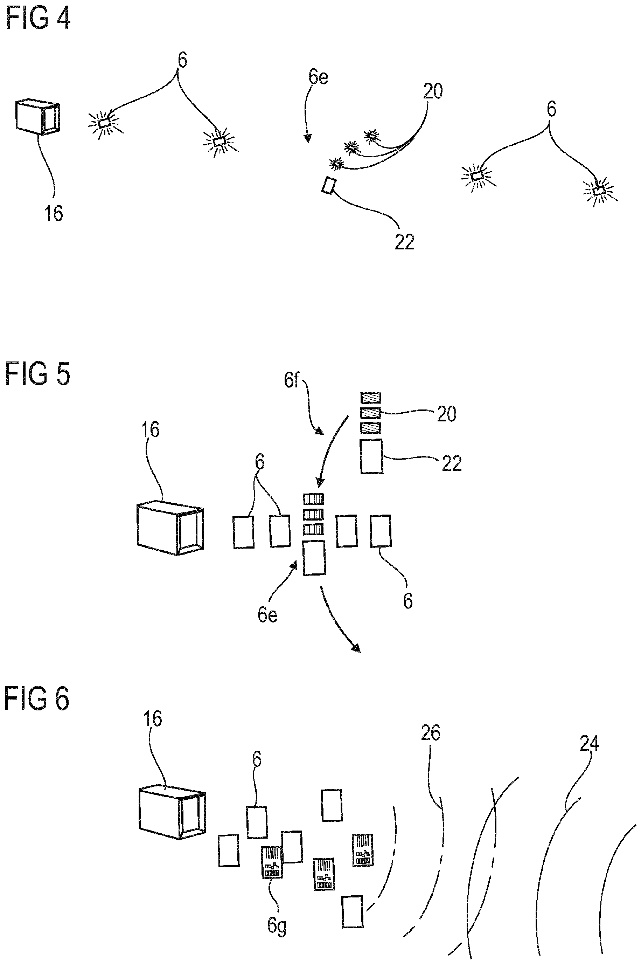

Ein weiteres Ausführungsbeispiel mit mehreren pyrotechnischen Sendern 6 ist in FIG 4 dargestellt. Ein Sender 6e enthält mehrere Sendeelemente 20, die aus einem Behälter 22 des Senders 6e ausgestoßen werden. Beim Ausstoß aus dem Behälter 22 werden die Sendeelemente 20 gezündet und brennen jeweils einzeln ab. Jeder der Sendeelemente 20 hat durch seine Zusammensetzung des Abbrandstoffs ein individuelles Abbrandspektrum, sodass der Sender 6e bei dem Beispiel aus FIG 4 mit drei verschiedenen Signalspektren strahlt zusätzlich zum Grundspektrum der übrigen Sender 6. Die Zusammensetzung dieser Signalspektren bildet die Freundkennung, die vom Fluggerät 4 erkannt wird.

Zu Tarnungszwecken der Freundkennung ist es sinnvoll, wenn diese veränderlich ist, sodass eine alte Freundkennung durch eine aktuelle ausgetauscht werden kann. Empfängerseitig ist dies relativ einfach durch Einspielen der entsprechenden Information in das Trackingsystem 8 beziehungsweise deren Steuereinheit 10 möglich. Senderseitig bedingt ein Kennungswechsel bei pyrotechnischen Sendern 6 in der Regel einen materiellen Austausch von Kennungssendern 6a, 6b, 6c, 6d, 6e, 6f, beispielsweise aus dem Behälter 16, 22. Bei programmierbaren Zündern kann ein Austausch entfallen und die Sender 6 bekommen neue Zündinformation aufgespielt.

FIG 5 zeigt einen solchen Austausch beispielhaft. Ein Behälter 16 enthält fünf Sender 6, von denen einer ein Signalsender 6e ist. Dieser soll durch einen neuen Signalsender 6f ersetzt werden, der andere Sendeelemente 20 aufweist, die sich also in ihrer spektralen Kombination von den Sendeelementen 20 des alten Senders 6e unterscheiden. Ein solcher Austausch ist einfach zu bewerkstelligen, wie FIG 5 zeigt: Der alte Signalsender 6e wird aus dem Behälter 16 entfernt und durch den neuen Signalsender 6f ersetzt. Der auf diese Weise neu bestückte Behälter 16 wird in das Fahrzeug 2 eingefügt und einsatzbereit gemacht.

Analog zu einer infraroten Freundkennung ist auch eine Radar-Freundkennung möglich, wenn das angreifende Fluggerät 4 das Fahrzeug 2 mit Radarstrahlung trackt. Die zuvor beschriebenen Details zum Schutz des Fahrzeugs 2 mittels Freund-Feind-Erkennung sind - bis auf pyrotechnische Details - auch auf die Radarkennung übertragbar, sodass sie im Folgenden nicht wiederholt werden. Es werden lediglich die Unterschiede der Radar-Verfahren zu den IR-Verfahren beschrieben.

Anhand FIG 6 wird im Folgenden das Aussenden einer Freundkennung als Radarsignal beschrieben. Das Fluggerät 4 sendet aktiv Radarstrahlung 24 aus, die am Fahrzeug 2 reflektiert und vom Trackingsystem 8 des Fluggeräts 4 aufgenommen und ausgewertet wird. Anhand der reflektierten Radarstrahlung wird das Fahrzeug 2 lokalisiert und verfolgt. Zum eigenen Schutz sendet das Fahrzeug 2 eine Freundkennung aus, entweder mittels eines fest installierten Radars oder mittels Abwurfs eines Senders 6. Die Freundkennung ist zweckmäßigerweise in der Frequenz gesendet, in der der Trackingsensor des Fluggeräts 4 sensitiv ist, sodass eine direkte und damit schnelle Kommunikation zwischen Fahrzeug 2 und Fluggerät 4 zustande kommt.

Analog zu Infrarot-Flares besteht auch im Radarbereich die Möglichkeit des Abwurfs von Täuschkörpern. Hierzu kann beispielsweise eine Vielzahl von metallischen Folien abgeworfen werden, die ihrerseits die Radarstrahlung 24 reflektieren und somit einen Radarnebel um das zu schützende Fahrzeug 2 legen. Bei dem Ausführungsbeispiel aus FIG 6 werden solche Täuschkörper als Sender 6 aus dem Behälter 16 ausgestoßen. Sie sind passive Sender 6, die einfallende Radarstrahlung 24 reflektieren und somit als Radarantwort 26 wieder aussenden.

Unter den Sendern 6 sind ein oder zweckmäßigerweise mehrere Sender 6g, die mit einer Radarmodifikationseinheit ausgestattet sind. Die Radarmodifikationseinheiten sind in FIG 6 auf den Sendern 6g zeichnerisch angedeutet und modifizieren die einfallende Radarstrahlung, sodass der wieder ausgesendeten Radarstrahlung 26 diese Modifikation als Freundkennung aufgeprägt ist. Die Sender 6g können aktive oder passive Sender 6g sein. Aktive Sender 6g enthalten einen Energiespeicher, dessen Energie zum aktiven Erzeugen von Radarstrahlung 26 verwendet wird. Passive Sender 6g reflektieren einfallende Radarstrahlung 24, gegebenenfalls in modifizierter Weise.

Eine Möglichkeit der Modifikation besteht darin, dass eine elektronische Schaltung der Radarmodifikationseinheit einen Teil der einfallenden Radarstrahlung 24 absorbiert, sodass nur ein Teil des Frequenzbandes der einfallenden Radarstrahlung 24 wieder reflektiert wird. Bei dem Beispiel aus FIG 6 werden aus dem gesamten Frequenzband der einfallenden Radarstrahlung 24 drei kleine Spektren herausabsorbiert, sodass die Radarantwort 26 aus vier voneinander getrennten Frequenzbändern besteht, wie in FIG 6 durch die unterbrochenen Linien der Radarantwort 26 angedeutet ist. Selbstverständlich ist die Anzahl der absorbierten Frequenzlücken beziehungsweise der reflektierten Frequenzbänder frei wählbar. Die Absorption kann durch einen Resonanzkreis erfolgen, der auf eine Absorptionsfrequenz gestimmt ist und diese Frequenz absorbiert.

Die Radarantwort 26 wird vom Trackingsystem 8 des Fluggeräts 4 empfangen, und die Steuereinheit 10 wertet die Radarantwort 26 auf eine Freundkennung aus, erkennt die Frequenzlücken und vergleicht diese mit als Freundkennung hinterlegter Information. Stimmen die Frequenzlücken in Anzahl, Lage und/oder Breite mit der hinterlegten Information überein, so wird die Freundkennung als solche erkannt und das Fluggerät 4 bricht den Angriff ab.

Ebenfalls ist es möglich, dass eine oder mehrere Absorptionsfrequenzen später "nachreflektiert" werden, also zeitlich verzögert gesendet werden. Dies kann geschehen, indem die Aktivierung der Resonanzfrequenz durch die Aufladung eines kapazitiven Elements gesteuert wird. Hierdurch ergeben sich mehr Kombinationsmöglichkeiten und damit bessere Codierverfahren. Die Aufladung kann aus eingestrahlter, integrierter RF-Leistung erfolgen. Beispielsweise bringen eine Diode und ein Steuer-Kondensator eine Spannung auf, welche dann die zur Zuschaltung des Resonators verwendete Diode aktiviert. Die Freundkennung kann dann durch die Kombination von Kapazität des Steuer-Kondensators und der Resonanzfrequenz definiert sein.

Zur Tarnung der Freundkennung können eine Vielzahl von Sendern 6 ausgeworfen werden, die jeweils eine Codiereinheit in Form einer Radarmodifikationseinheit enthalten, wobei die einzelnen Radarmodifikationseinheiten jedoch alle oder in Gruppen unterschiedlich modifizierte Signale aussenden. Auf diese Weise enthält die Radarantwort 26 eine Vielzahl von unterschiedlich modifizierten Signalen, aus denen ein Dritter nicht herausfinden kann, ob eine Freundkennung enthalten ist und wenn ja, welches Signal die Freundkennung ist. Wichtig hierbei ist lediglich, dass eine Anpassung zwischen Sendern 6g und Trackingsystem 8 derart vorhanden ist, dass das Trackingsystem 8 in der Lage ist, die Freundkennung - unter vielen anderen Signalen - zu erkennen.

In analoger Weise kann die Radarmodifikationseinheit die Radarantwort 26 in der Art erzeugen, dass sie frequenzverschoben zur einfallenden Radarstrahlung 24 ist. Beispielsweise wird das ganze einfallende Frequenzband mithilfe der elektronischen Baueinheiten auf den Sendern 6g um eine vorbestimmte Frequenz verschoben reflektiert.

Zudem ist eine Dopplung - oder allgemeiner: Vervielfachung - der einfallenden Radarstrahlung 24 möglich. Beispielsweise wird dem unveränderten Reflex ein Echo als zusätzliche Radarantwort 26 hinzugefügt. Da die einfallende Radarstrahlung 24 üblicherweise gepulst ist, ist das Echo - wenn es zeitlich vor dem nächsten Puls erfolgt - klar vom Fluggerät 4 erkennbar. Ein vorbestimmter Zeitversatz zwischen Originalreflex und Echo kann die Freundkennung oder ein Teil davon sein. In anderen Worten wird Trackingstrahlung des Fluggeräts 4 von den Sendern 6g absorbiert und zeitverschoben in Richtung zum Fluggerät 4 wieder abgestrahlt, wobei die Zeitverschiebung ein Bestandteil des Freundsignals ist.

Neben einer passiven Ausstrahlung der Radarantwort 26 ist auch eine aktive Ausstrahlung der Radarantwort 26 möglich. Empfängt eine Codiereinheit eines aktiven Senders 6g die Radarstrahlung 24, so kann hierdurch ausgelöst ein aktives Senden - energetisch gespeist von einem Energiespeicher - erfolgen. Der Energiespeicher kann eine Batterie, eine Pyrobatterie oder ein Kondensator sein, beispielsweise ein Gold-Cap. Die Freundkennung kann hierbei von einer elektronischen Schaltung auf den Sendern 6g erzeugt und abgestrahlt werden.

Wenn mehrere Sender 6g in der Luft sind und ein modifiziertes Signal als Radarantwort 26 aussenden, insbesondere wenn es ein aktives Signal ist, ist es wichtig, dass das Aussenden der Radarantwort 26 synchronisiert erfolgt, sodass sie klar beim Fluggerät 4 empfangen werden kann. Hierzu kann einfallende gepulste Trackingstrahlung insbesondere die aktiven Sendeeinheiten der mehreren Sender 6 synchronisieren. Die Sender 6g strahlen die Freundkennung synchronisiert ab, sodass sich ihr Signal addiert und klar empfangbar beim Fluggerät 4 eintrifft.

Zum Verändern der Freundkennung kann die Radarmodifikationseinheit oder eine aktive Sendeeinheit umprogrammiert werden oder neue Software mit einer neuen Freundkennung erhalten. Ebenfalls möglich ist es, nur oder zusätzlich die Sendeantenne eines Senders 6g zu verändern, sodass sie auf einer anderen Frequenz aussendet. Beispielsweise wir die Antenne gekürzt, oder ein Muster wird in die Antenne ein- oder ausgestanzt, oder die Antenne wird anders geometrisch verändert. Generell lässt sich durch solche Antennengestaltung die Freundkennung erzeugen, auch ohne eine nachträgliche Veränderung der Geometrie zur Codeveränderung.

### Bezugszeichenliste

- 2: Fahrzeug
- 4: Fluggerät
- 5: Flügelsystem
- 6, 6a-g: Sender
- 7: Wirkkörper
- 8: Trackingsystem
- 10: Steuereinheit
- 12: Signal
- 14: Störlaser
- 16: Behälter
- 17: Auswurfeinheit
- 18: Strahlungsverlauf
- 20: Sendeelement
- 22: Behälter
- 24: Radarstrahlung
- 26: Radarantwort

## Patentansprüche

1. Verfahren zum Schützen eines Fahrzeugs (2) durch eine Freund-Feind-Erkennung, bei dem ein Fluggerät (4) mit einem Trackingsystem (8), das einen Trackingsensor und eine Steuereinheit (10) enthält, das Fahrzeug (2) in einem Angriff ansteuert,
wobei
das Fluggerät (4) ein Signal (12) mit einer Abwehrmaßnahme empfängt, innerhalb derer eine Freundkennung ist, die Freundkennung als solche erkennt und aufgrund des Erkennens den Angriff abbricht, wobei das Signal (12) mit der Freundkennung in einem Frequenzbereich empfangen wird, in dem der Trackingsensor des Fluggeräts (4) sensitiv ist, wobei das Signal (12) vom Trackingsensor empfangen und von der Steuereinheit (10) verarbeitet wird.

2. Verfahren nach Anspruch 1,
**dadurch gekennzeichnet,**
**dass** das Signal (12) mit der Freundkennung im Frequenzbereich empfangen wird, der zum Tracking des Fahrzeugs (2) verwendet wird.

3. Verfahren nach einem der Ansprüche 1 oder 2,
**dadurch gekennzeichnet,**
**dass** das Signal (12) mit der Freundkennung ein amplitudenmoduliertes IR-Signal ist, aus dessen Amplitudenmodulation die Freundkennung als solche erkannt wird, und / oder dass das Signal (12) mit der Freundkennung ein frequenzmoduliertes IR-Signal ist, aus dessen Frequenzmodulation die Freundkennung als solche erkannt wird.

4. Verfahren nach einem der vorhergehenden Ansprüche,
**dadurch gekennzeichnet,**
**dass** die Freundkennung eine vorbestimmte Zusammenstellung von Frequenzbereichen umfasst, wobei das Trackingsystem (8) diese Frequenzbereiche mithilfe zumindest eines Frequenzfilters und getrennt vom Trackingkanal einzeln auswertet.

5. Verfahren nach einem der vorhergehenden Ansprüche,
**dadurch gekennzeichnet,**
**dass** die Freundkennung als von einem Sender (6a-g) ausgesendet erkannt wird, den das Fahrzeug (2) ausgeworfen hat.

6. Verfahren zum Schützen eines Fahrzeugs (2) durch eine Freund-Feind-Erkennung, bei dem das Fahrzeug (2) ein Fluggerät (4) als das Fahrzeug (2) angreifendes Fluggerät (4) klassifiziert und ein Signal (12) mit einer Freundkennung aussendet,
wobei
das Signal (12) die Freundkennung in einem Frequenzbereich enthält, in dem Trackingsensoren solcher Fluggeräte (4) sensitiv sind, die zur Zerstörung eines Fahrzeugs (2) ausgeführt sind, wobei das Fahrzeug (2) mit einem Sender das Signal (12) mit einer Abwehrmaßnahme aussendet innerhalb derer die Freundkennung ist, wobei das Signal (12) vorzugsweise von einem Störlaser (14) oder IR-Jammer ausgesendet wird.

7. Verfahren nach Anspruch 6,
**dadurch gekennzeichnet,**
**dass** das Fahrzeug (2) einen Sender (6a-g) auswirft, der das Signal (12) mit der Freundkennung aussendet.

8. Verfahren nach Anspruch 6 oder 7,
**dadurch gekennzeichnet,**
**dass** das Fahrzeug (2) mehrere verschiedene Täuschkörper auswirft, die Täuschkörper unterschiedliche Substanzen abbrennen und nur ein Teil der Täuschkörper, insbesondere nur ein einziger Täuschkörper, hierdurch Strahlung aussendet, deren Strahlungsfrequenzen Bestandteil des Freundsignals sind.

9. Verfahren nach einem der Ansprüche 6 bis 8,
**dadurch gekennzeichnet,**
**dass** das Fahrzeug (2) zumindest einen pyrotechnischen Körper auswirft, dessen Abbrandstrahlung das Freundsignal enthält.

10. Verfahren nach einem der Ansprüche 6 bis 9,
**dadurch gekennzeichnet,**
**dass** das Fahrzeug (2) mehrere Täuschkörper auswirft, wobei die zeitliche Kodierung von deren Auswurfsequenz das Freundsignal ergibt.

11. Verfahren nach einem der Ansprüche 6 bis 10,
**dadurch gekennzeichnet,**
**dass** das Fahrzeug (2) einen zum Aussenden von Radarstrahlung (26) ausgeführten Sender (6g) aufweist und/oder auswirft, der das Signal mit der Freundkennung aussendet.

12. Verfahren nach Anspruch 11,
**dadurch gekennzeichnet,**
**dass** der zum Aussenden von Radarstrahlung (26) ausgeführte Sender (6g) Trackingstrahlung des Fluggeräts (4) reflektiert und hierbei zumindest ein Strahlungsband innerhalb des Frequenzbereichs der Trackingstrahlung absorbiert und die Absorption ein Bestandteil des Freundsignals ist.

13. Verfahren nach Anspruch 11 oder 12,
**dadurch gekennzeichnet,**
**dass** der zum Aussenden von Radarstrahlung (26) ausgeführte Sender (6g) Trackingstrahlung des Fluggeräts (4) absorbiert und frequenzverschoben in Richtung zum Fluggerät (4) abstrahlt und die Frequenzverschiebung ein Bestandteil des Freundsignals ist, und / oder dass der zum Aussenden von Radarstrahlung (26) ausgeführte Sender (6g) Trackingstrahlung des Fluggeräts (4) absorbiert und zeitverschoben in Richtung zum Fluggerät (4) abstrahlt und die Zeitverschiebung ein Bestandteil des Freundsignals ist.

14. Verfahren nach einem der Ansprüche 6 bis 13,
**dadurch gekennzeichnet,**
**dass** das Fahrzeug (2) mehrere zum Aussenden von Radarstrahlung (26) ausgeführte Sender (6g) auswirft und die auf die Sender (6g) einfallende gepulste Trackingstrahlung aktive Sendeeinheiten der mehreren Sender (6g) synchronisiert.

15. Verfahren nach einem der Ansprüche 6 bis 14,
**dadurch gekennzeichnet,**
**dass** die Freundkennung programmierbar ist und vor dem Aussenden von einer früheren anderen Freundkennung in die aktuelle Freundkennung verändert wurde.

16. Fluggerät (4) mit einem Trackingsystem (8) enthaltend einen Trackingsensor und eine Steuereinheit (10) zum Tracken eines anzugreifenden Fahrzeugs (2), einem Flügelsystem (5) zum fliegenden Ansteuern des Fahrzeugs (2) und einem Wirkkörper (7) zum Zerstören des Fahrzeugs (2),
wobei
das Trackingsystem (8) dazu vorbereitet ist, ein Signal (12) mit einer Abwehrmaßnahme zu empfangen, innerhalb derer eine Freundkennung ist, wobei das Signal (12) mit der Freundkennung in einem Frequenzbereich empfangen wird, in dem der Trackingsensor des Fluggerätes (4) sensitiv ist, und wobei die Steuereinheit (10) dazu vorbereitet ist, aus den empfangenen Daten eine Freundkennung des Fahrzeugs (2) als solche zu erkennen und in Abhängigkeit von dem Erkennen einen bereits eingeleiteten Angriff auf das Fahrzeug (2) abzubrechen.

17. Fluggerät (4) nach Anspruch 16,
**dadurch gekennzeichnet,**
**dass** das Trackingsystem (8) einen Frequenzanalysator aufweist, der zum Erkennen von Strahlungsfrequenzen ausgeführt ist, wobei die Steuereinheit (10) zum Erkennen des Freundsignals aus diesen Strahlungsfrequenzen vorbereitet ist.

18. Sendesystem mit einem Sender (6a-g), umfassend eine Signalabstrahleinheit und eine Codiereinheit, die dazu vorbereitet ist, einem Signal (12) eine Freundkennung aufzuprägen, und umfassend einen Behälter (16) zum Halten des Senders (6a-g),
wobei
die Signalabstrahleinheit dazu vorbereitet ist, das Signal in einem Frequenzbereich auszusenden, in dem Trackingsensoren solcher Fluggeräte (4) sensitiv sind, die zur Zerstörung eines Fahrzeugs (2) ausgeführt sind, wobei der Sender dazu vorbereitet ist, mit dem Signal (12) eine Abwehrmaßnahme auszuführen, innerhalb derer die Freundkennung ist.

19. Sendesystem nach Anspruch 18,
**dadurch gekennzeichnet,**
**dass** der Behälter (16) eine Auswurfeinheit aufweist, die zum Auswerfen des Senders (6a-g) aus dem Behälter (16) vorbereitet ist, wobei der Behälter (16) vorzugsweise eine Vielzahl von Radarreflektoren (6) umschließt.

20. Sendesystem nach Anspruch 18 oder 19,
**dadurch gekennzeichnet,**
**dass** der Sender (6g) eine elektronische Schaltung aufweist, die die Codierung der Freundkennung steuert.

## Claims

1. Method for protecting a vehicle (2) by an identification as a friend or foe, in which an aerial vehicle (4) with a tracking system (8), which includes a tracking sensor and a control unit (10), engages the vehicle (2) in an attack,
wherein
the aerial vehicle (4) receives a signal (12) with a defensive measure, within which there is an identification as a friend, detects the identification as a friend as such and, on the basis of the detection, aborts the attack, the signal (12) with the identification as a friend being received in a frequency range in which the tracking sensor of the aerial vehicle (4) is sensitive, the signal (12) being received by the tracking sensor and being processed by the control unit (10).

2. Method according to Claim 1,
**characterized**
**in that** the signal (12) with the identification as a friend is received in the frequency range that is used for the tracking of the vehicle (2).

3. Method according to either of Claims 1 and 2,
**characterized**
**in that** the signal (12) with the identification as a friend is an amplitude-modulated IR signal, from the amplitude modulation of which the identification as a friend is detected as such, and/or in that the signal (12) with the identification as a friend is a frequency-modulated IR signal, from the frequency modulation of which the identification as a friend is detected as such.

4. Method according to one of the preceding claims,
**characterized**
**in that** the identification as a friend comprises a predetermined compilation of frequency ranges, the tracking system (8) evaluating these frequency ranges individually and separately from the tracking channel with the aid of at least one frequency filter.

5. Method according to one of the preceding claims,
**characterized**
**in that** the identification as a friend is detected as emitted by an emitter (6a-g) that the vehicle (2) has launched.

6. Method for protecting a vehicle (2) by an identification as a friend or foe, in which the vehicle (2) classifies an aerial vehicle (4) as an aerial vehicle (4) attacking the vehicle (2) and emits a signal (12) with an identification as a friend,
wherein
the signal (12) contains the identification as a friend in a frequency range in which tracking sensors of such aerial vehicles (4) that are designed for destroying a vehicle (2) are sensitive, the vehicle (2) using an emitter to emit the signal (12) with a defensive measure, within which there is the identification as a friend, the signal (12) preferably being emitted by an interfering laser (14) or an IR jammer.

7. Method according to Claim 6,
**characterized**
**in that** the vehicle (2) launches an emitter (6a-g), which emits the signal (12) with the identification as a friend.

8. Method according to Claim 6 or 7,
**characterized**
**in that** the vehicle (2) launches multiple different decoys, the decoys burn up different substances and only some of the decoys, in particular only a single decoy, thereby emit(s) radiation of which the radiation frequencies are part of the friend signal.

9. Method according to one of Claims 6 to 8,
**characterized**
**in that** the vehicle (2) launches at least one pyrotechnic body of which the radiation from its burn up contains the friend signal.

10. Method according to one of Claims 6 to 9,
**characterized**
**in that** the vehicle (2) launches multiple decoys, the time coding of their launch sequence producing the friend signal.

11. Method according to one of Claims 6 to 10,
**characterized**
**in that** the vehicle (2) has and/or launches an emitter (6g) designed for emitting radar radiation (26), which emits the signal with the identification as a friend.

12. Method according to Claim 11,
**characterized**
**in that** the emitter (6g) designed for emitting radar radiation (26) reflects tracking radiation of the aerial vehicle (4) and thereby absorbs at least one radiation band within the frequency range of the tracking radiation and the absorption is part of the friend signal.

13. Method according to Claim 11 or 12,
**characterized**
**in that** the emitter (6g) designed for emitting radar radiation (26) absorbs tracking radiation of the aerial vehicle (4) and radiates it in a frequency-shifted form in the direction of the aerial vehicle (4) and the frequency shift is part of the friend signal, and/or in that the emitter (6g) designed for emitting radar radiation (26) absorbs tracking radiation of the aerial vehicle (4) and radiates it in a time-shifted form in the direction of the aerial vehicle (4) and the time shift is part of the friend signal.

14. Method according to one of Claims 6 to 13,
**characterized**
**in that** the vehicle (2) launches multiple emitters (6g) designed for emitting radar radiation (26) and the pulsed tracking radiation incident on the emitters (6g) synchronizes active emitting units of the multiple emitters (6g).

15. Method according to one of Claims 6 to 14,
**characterized**
**in that** the identification as a friend is programmable and, before emission, has been changed from an earlier, different identification as a friend to the current identification as a friend.

16. Aerial vehicle (4) with a tracking system (8), including a
tracking sensor and a control unit (10) for tracking a vehicle (2) to be attacked, a system of fins (5) for aerial engagement of the vehicle (2) and a submunition (7) for destroying the vehicle (2),
wherein
the tracking system (8) is prepared for receiving a signal (12) with a defensive measure, within which there is an identification as a friend, the signal (12) with the identification as a friend being received in a frequency range in which the tracking sensor of the aerial vehicle (4) is sensitive, and the control unit (10) being prepared for detecting an identification as a friend of the vehicle (2) from the data received as such and, dependent on the detection, aborting an attack on the vehicle (2) that has already been initiated.

17. Aerial vehicle (4) according to Claim 16,
**characterized**
**in that** the tracking system (8) has a frequency analyser, which is designed for detecting radiation frequencies, the control unit (10) being prepared for detecting the friend signal from these radiation frequencies.

18. Emitting system with an emitter (6a-g), comprising a signal radiating unit and a coding unit, which is prepared for impressing an identification as a friend on a signal (12), and comprising a container (16) for holding the emitter (6a-g),
wherein
the signal radiating unit is prepared for emitting the signal in a frequency range in which tracking sensors of such aerial vehicles (4) that are designed for destroying a vehicle (2) are sensitive, the emitter being prepared to execute a defensive measure, within which there is the identification as a friend, with the signal (12).

19. Emitting system according to Claim 18,
**characterized**
**in that** the container (16) has a launching unit, which is prepared for launching the emitter (6a-g) from the container (16), the container (16) preferably enclosing a multiplicity of radar reflectors (6).

20. Emitting system according to Claim 18 or 19,
**characterized**
**in that** the emitter (6g) has an electronic circuit, which controls the coding of the identification as a friend.

## Revendications

1. Procédé de protection d'un véhicule (2) au moyen d'une identification ami/ennemi, dans lequel un engin volant (4), pourvu d'un système de localisation (8) qui contient un capteur de localisation et une unité de commande (10), pilote le véhicule (2) lors d'une attaque, dans lequel l'engin volant (4) reçoit un signal (12) comprenant une mesure de défense à l'intérieur de laquelle se trouve un identifiant ami, identifie l'identifiant ami en tant que tel, et abandonne l'attaque sur la base de l'identification, dans lequel le signal (12) comprenant l'identifiant ami est reçu dans une plage de fréquence dans laquelle le capteur de localisation de l'engin volant (4) est sensible, le signal (12) étant reçu par le capteur de localisation et traité par l'unité de commande (10).

2. Procédé selon la revendication 1, **caractérisé en ce que** le signal (12) comprenant l'identifiant ami est reçu dans la plage de fréquence qui est utilisée pour la localisation du véhicule (2).

3. Procédé selon l'une quelconque des revendications 1 ou 2, **caractérisé en ce que** le signal (12) comprenant l'identifiant ami est un signal IR modulé en amplitude à partir de la modulation en amplitude duquel l'identifiant ami est reconnu en tant que tel, et/ou **en ce que** le signal (12) comprenant l'identifiant ami est un signal IR modulé en fréquence à partir de la modulation en fréquence duquel l'identifiant ami est identifié en tant que tel.

4. Procédé selon l'une quelconque des revendications précédentes, **caractérisé en ce que** l'identifiant ami comprend un assemblage prédéterminé de plages de fréquence, le système de localisation (8) évaluant ces plages de fréquence individuellement à l'aide d'au moins un filtre de fréquence et séparément du signal de localisation.

5. Procédé selon l'une quelconque des revendications précédentes, **caractérisé en ce que** l'identifiant ami est identifié comme étant émis par un émetteur (6a-g) que le véhicule (2) a éjecté.

6. Procédé de protection d'un véhicule (2) au moyen d'une identification ami/ennemi, dans lequel le véhicule (2) classifie un engin volant (4) comme un engin volant (4) attaquant le véhicule (2) et émet un signal (12) comprenant un identifiant ami, le signal (12) contenant l'identifiant ami dans une plage de fréquence dans laquelle sont sensibles des capteurs de localisation d'engins volants (4) qui sont réalisés pour la destruction d'un véhicule (2), le véhicule (2) émettant par un émetteur le signal (12) comprenant une mesure de défense à l'intérieur de laquelle se trouve l'identifiant ami, le signal (12) étant de préférence émis par un laser de brouillage (14) ou un brouilleur IR.

7. Procédé selon la revendication 6, **caractérisé en ce que** le véhicule (2) éjecte un émetteur (6a-g) qui émet le signal (12) comprenant l'identifiant ami.

8. Procédé selon la revendication 6 ou 7, **caractérisé en ce que** le véhicule (2) éjecte plusieurs leurres, les leurres brûlent différentes substances, et seule une partie des leurres, en particulier un seul leurre, émet ainsi un rayonnement dont les fréquences de rayonnement font partie du signal ami.

9. Procédé selon l'une quelconque des revendications 6 à 8, **caractérisé en ce que** le véhicule (2) éjecte au moins un corps pyrotechnique dont le rayonnement de tir contient le signal ami.

10. Procédé selon l'une quelconque des revendications 6 à 9, **caractérisé en ce que** le véhicule (2) éjecte plusieurs leurres, le codage temporel de leur séquence d'éjection produisant le signal ami.

11. Procédé selon l'une quelconque des revendications 6 à 10, **caractérisé en ce que** le véhicule (2) présente et/ou éjecte un émetteur (6g) réalisé pour émettre un rayonnement radar (26) et qui émet le signal comprenant l'identifiant ami.

12. Procédé selon la revendication 11, **caractérisé en ce que** l'émetteur (6g) réalisé pour émettre un rayonnement radar (26) réfléchit un rayonnement de localisation de l'engin volant (4) et absorbe ainsi au moins une bande de rayonnement à l'intérieur de la plage de fréquence du rayonnement de localisation, et l'absorption est une composante du signal ami.

13. Procédé selon la revendication 11 ou 12, **caractérisé en ce que** l'émetteur (6g) réalisé pour émettre un rayonnement radar (26) absorbe un rayonnement de localisation de l'engin volant (4) et le dégage en décalage de fréquence en direction de l'engin volant (4), et le décalage de fréquence est une composante du signal ami, et/ou **en ce que** l'émetteur (6g) réalisé pour émettre un rayonnement radar (26) absorbe un rayonnement de localisation de l'engin volant (4) et le dégage avec un décalage dans le temps en direction de l'engin volant (4), et le décalage dans le temps est une composante du signal ami.

14. Procédé selon l'une quelconque des revendications 6 à 13, **caractérisé en ce que** le véhicule (2) éjecte plusieurs émetteurs (6g) réalisés pour émettre un rayonnement radar (26), et le rayonnement de localisation pulsé, incident sur les émetteurs (6g), synchronise des unités d'émission actives des plusieurs émetteurs (6g).

15. Procédé selon l'une quelconque des revendications 6 à 14, **caractérisé en ce que** l'identifiant ami est programmable, et a été modifié avant l'émission d'un autre identifiant ami antérieur en identifiant ami actuel.

16. Engin volant (4) comprenant un système de localisation (8) contenant un émetteur de localisation et une unité de commande (10) pour la localisation d'un véhicule à attaquer (2), un système d'ailes (5) pour le pilotage volant du véhicule (2) et un corps actif (7) pour la destruction du véhicule (2),
le système de localisation (8) étant préparé pour recevoir un signal (12) comprenant une mesure de défense à l'intérieur de laquelle se trouve un identifiant ami, le signal (12) comprenant l'identifiant ami étant reçu dans une plage de fréquence dans laquelle le capteur de localisation de l'engin volant (4) est sensible, et l'unité de commande (10) est préparée pour identifier à partir des données reçues un identifiant ami du véhicule (2) en tant que tel et pour abandonner en fonction de l'identification une attaque déjà lancée sur le véhicule (2).

17. Engin volant (4) selon la revendication 16, **caractérisé en ce que** le système de localisation (8) présente un analyseur de fréquence qui est réalisé pour identifier des fréquences de rayonnement, l'unité de commande (10) étant préparée pour identifier le signal ami à partir de ces fréquences de rayonnement.

18. Système d'émission pourvu d'un émetteur (6a-g), comprenant une unité d'émission de signal et une unité de codage qui est préparée pour appliquer un identifiant ami à un signal (12), et comprenant un récipient (16) pour contenir l'émetteur (6a-g), l'unité d'émission de signal étant préparée pour émettre le signal dans une plage de fréquence dans laquelle sont sensibles des capteurs de localisation d'engins volants (4) qui sont réalisés pour la destruction d'un véhicule (2), l'émetteur étant préparé pour effectuer avec le signal (12) une mesure de défense à l'intérieur de laquelle se trouve l'identifiant ami.

19. Système d'émission selon la revendication 18, **caractérisé en ce que** le récipient (16) présente une unité d'éjection qui est préparée pour éjecter l'émetteur (6a-g) du récipient (16), le récipient (16) enfermant de préférence une pluralité de réflecteurs radar (6).

20. Système d'émission selon la revendication 18 ou 19, **caractérisé en ce que** l'émetteur (6g) présente un circuit électronique qui pilote le codage de l'identifiant ami.
